# EUROPÄISCHE PATENTSCHRIFT

(11) **EP 1 044 659 B1**
(45) Veröffentlichungstag und Bekanntmachung des Hinweises auf die Patenterteilung: **08.12.2004**
(21) Anmeldenummer: 00114473.2
(22) Anmeldetag: 29.08.1996
(51) Int. Cl.: A61C 8/00

(54) **Anker für Implantatkörper und Richtvorrichtung zu deren Ausrichtung**
Anchor for dental implants and device for alignment of the anchor
Elément d'ancrage pour implants dentaires et dispositif pour son alignement

(30) Priorität: 01.09.1995 DE 29514042 U
(43) Veröffentlichungstag der Anmeldung: 18.10.2000
(62) Teilanmeldung aus: 96930119.1
(73) Patentinhaber: ProFim Ltd., Huddersfield, West Yorkshire HD5 8QQ (GB)
(72) Erfinder: Unger, Dr. med. dent., Heinz-Dieter, 49080 Osnabrück (DE)
(74) Vertreter: Habbel, Lutz, Dipl.-Ing.

(56) Entgegenhaltungen:
- EP-A- 0 288 702
- DE-A- 4 115 335
- US-A- 5 073 110

## Beschreibung

Die Erfindung betrifft eine Richtvorrichtung zur Ausrichtung der Anschlußteile von Ankern für Zahnprothesen gemäß dem Oberbegriff des Anspruchs 1.

Zum Auffinden einer gemeinsamen Einschubrichtung von drehbaren Ankerköpfen von Implantaten ist eine Vorrichtung bekannt (DE-A-41 15 335), die ein Zentralteil, welches eine Meß- und Bezugsebene definiert, und eine Mehrzahl von Fassungen umfaßt, die an dem Zentralteil über ausziehbare Arme schwenkbar angelenkt sind. Durch Ausziehen und Verschwenken der Arme können die Fassungen über jeden Punkt eines Kiefers platziert und mit entsprechenden Ankerköpfen, Pfeilern od.dgl. Implantataufbauteilen ausrichtend in Eingriff gebracht werden. Dies geschieht durch Absenken der Vorrichtung als Ganzes auf die auszurichtenden Implantataufbauteile.

Die Erfindung befaßt sich mit dem Problem, eine besonders einfache, leicht zu handhabende Richtvorrichtung zu schaffen, welche die Maßnahmen zur Parallelisierung der Anschlußteile von Implantatkörpern zugeordneten Ankern vereinfacht, verkürzt und verbilligt. Die Erfindung löst das Problem durch eine Richtvorrichtung mit den Merkmalen des Anspruchs 1. Hinsichtlich wesentlicher weiterer Ausgestaltungen wird auf die Ansprüche 2 bis 9 verwiesen.

Die erfindungsgemäße Richtvorrichtung schafft eine überaus einfache Möglichkeit zur gewünschten Ausrichtung der Anschlußteile von Implantatkörpern in einen Kiefer unabhängig von der Ausrichtung der Implantatkörper, überaus schnell und dabei exakt vorgenommen werden kann, wodurch sich die Beanspruchung des Patienten auf eine Sitzung reduziert.

Zahlreiche weitere Vorteile und Einzelheiten ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Darstellung der Richtvorrichtung nach der Erfindung,
- Fig. 2: eine Einzeldarstellung eines Richtgliedes der Richtvorrichtung nach Fig. 1 im Längsschnitt,
- Fig. 3: eine abgebrochene Draufsicht zur Fig. 2,
- Fig. 4: eine Ansicht eines mit dem Anschlußteil der Adaptervorrichtung verbindbaren und mit einem Richtglied zusammenwirkenden Richtstiftes,
- Fig. 5: eine Darstellung der Spannmutter im Schnitt nach der Linie V-V in Fig. 6,
- Fig. 6: eine Draufsicht zu Fig. 5,

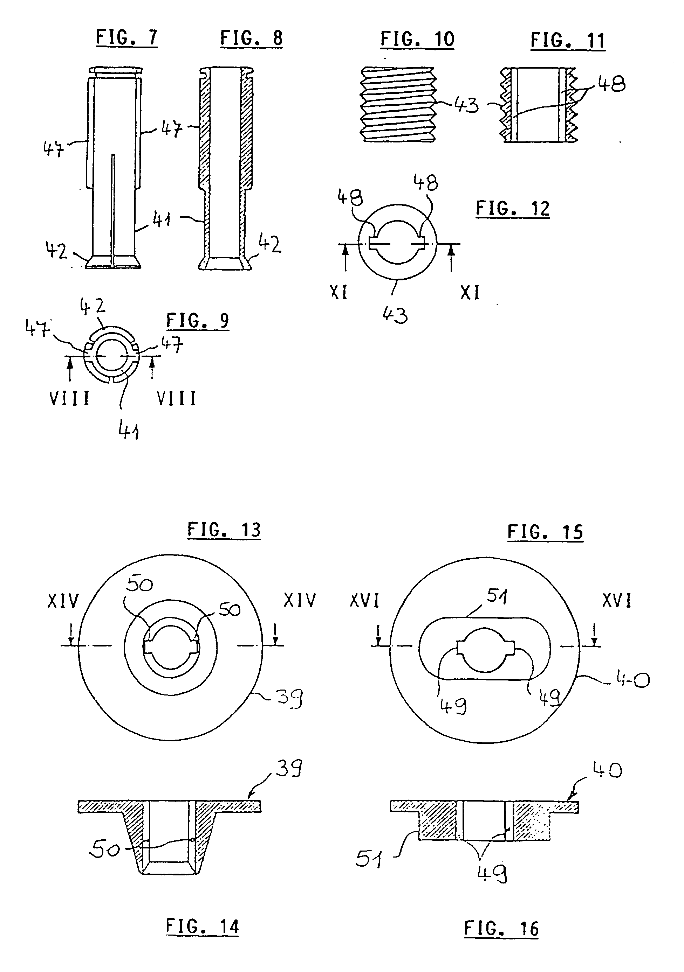

- Fig. 7: eine Seitenansicht der Spannhülse des Richtgliedes nach Fig. 2 in Einzeldarstellung,
- Fig. 8: einen Schnitt durch die Spannhülse nach der Linie VIII-VIII in Fig. 9,
- Fig. 9: eine Draufsicht zu Fig. 8,
- Fig. 10: eine Seitenansicht der Außengewindebüchse des Richtgliedes nach Fig. 2,
- Fig. 11: einen Schnitt durch die Außengewindebuchse nach der Linie XI-XI in Fig. 12,
- Fig. 12: eine Draufsicht zu Fig. 11,
- Fig. 13: eine Draufsicht auf den unteren Parallelisierungskörper des Richtgliedes nach Fig. 2,
- Fig. 14: einen Schnitt nach der Linie XIV-XIV in Fig. 13,
- Fig. 15: eine Ansicht des oberen Parallelisierungskörpers des Richtgliedes nach Fig. 2 von unten,
- Fig. 16: einen Schnitt nach der Linie XVI-XVI in Fig. 15,
- Fig. 17: eine Draufsicht auf eine Richtschablone der Richtvorrichtung nach Fig. 1,
- Fig. 18: einen Schnitt nach der Linie XVIII-XVIII in Fig. 17,
- Fig. 19 und 20: Seitenansichten des Griffsteils der Richtschablone in Fig. 17, und
- Fig. 21 und 22: Ansichten einer abgewandelten Richtschablone.

Der in der Zeichnung dargestellte Anker für prothetische Suprakonstruktionen wie Zahnprothesen besteht im wesentlichen aus einer Adaptervorrichtung 1, die einen in einen Implantatkörper 2 mittels eines Außengewindezapfens 3 einschraubbaren Trägerteil 4 und einen im Trägerteil 4 ausrichtbar abgestützten Anschlußteil 5 umfaßt, und aus einem mit dem Anschlußteil 5 verbindbaren Ankerkopfteil für Zahnprothesen, der als Kugelkopfteil oder Kronen- bzw. Konuskopfteil, ausgebildet sein oder irgendeine sonst geeignete Ausbildung haben kann. Der Ankerkopfteil ist jeweils in den Anschlußteil 5 der Adaptervorrichtung 1 einschraubbar.

Der Anschlußteil 5 ist im Trägerteil 4 nach allen Richtungen hin begrenzt verlagerbar abgestützt und wird in gewünschter Ausrichtung seiner Achse zur Achse 20 des Implantatkörpers 2 durch die Fixierschraube 15 festgelegt.

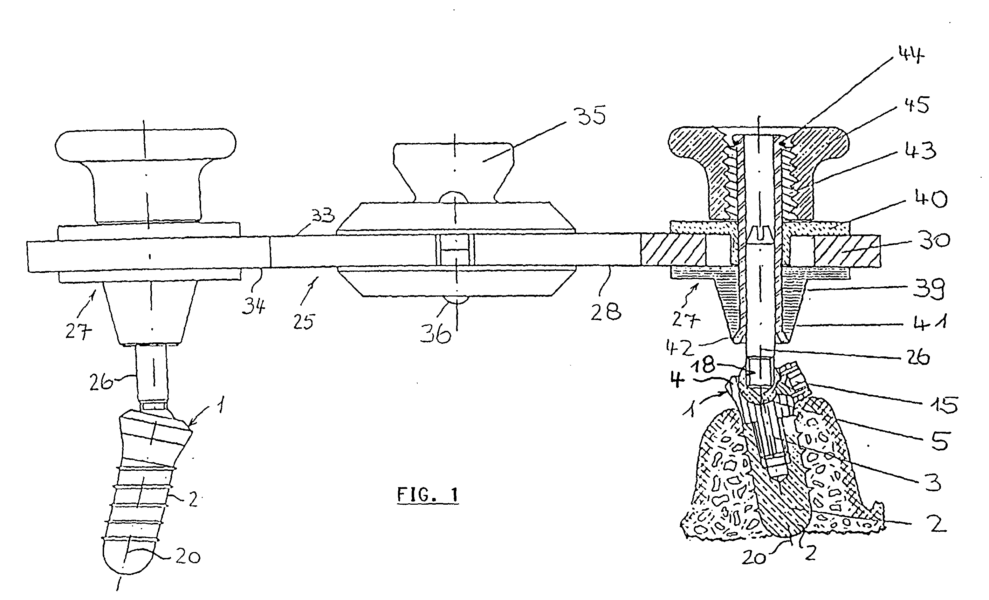

Zur Erleichterung des Richtvorganges findet die in Fig. 1 veranschaulichte erfindungsgemäße Richtvorrichtung 25 Anwendung, die in Fig. 1 im Einsatz bei zwei Adaptervorrichtungen 1 in Implantatkörpern 2 veranschaulicht ist, jedoch auch bei mehr als zwei zur gemeinsamen Abstützung einer Zahnprothese vorgesehenen Adaptervorrichtungen 1 zum Einsatz kommen kann. Die Implantatkörper 2 sind mit untereinander im Raum divergierenden Achsen 20 veranschaulicht, bei denen direkt in die Implantatkörper 2 eingeschraubte Ankerkopfteile eine Ausrichtung einnehmen würden, bei der deren Achse mit der Achse 20 der Implantatkörper 2 zusammenfällt.

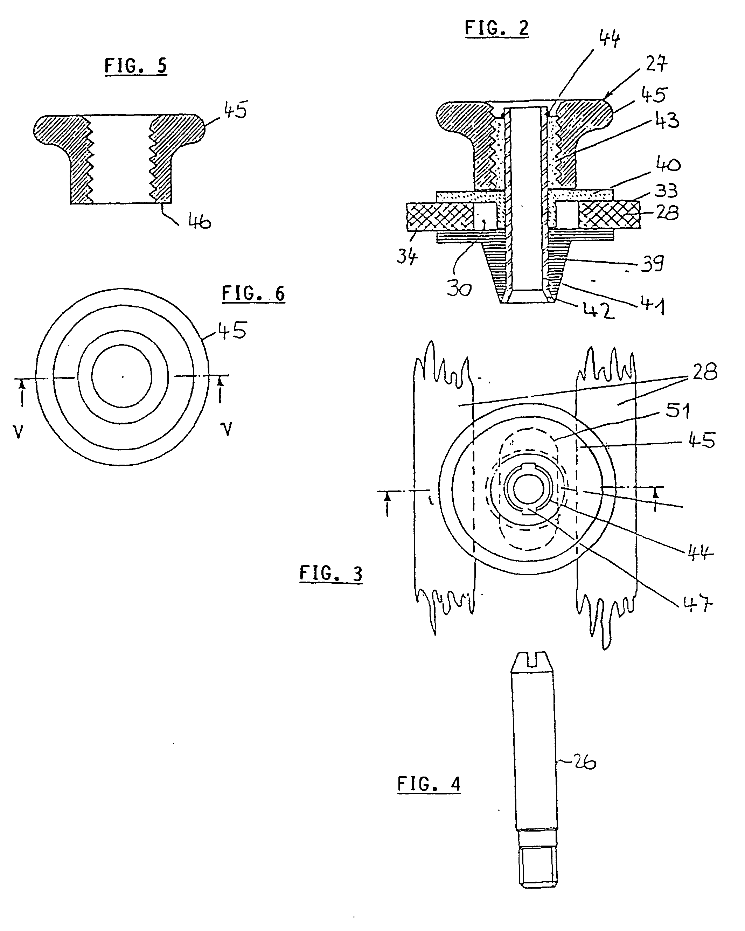

Um die für den Sitz und die Handhabung einer Zahnprothese optimale parallele Ausrichtung der gemeinsam eine Zahnprothese abstützenden Ankerkopfteile zu erreichen, werden in die Anschlußbohrungen 18 der Anschlußteile 5 zunächst Richtstifte 26 (Fig. 4) eingeschraubt, und zwar zu einem Zeitpunkt, zu dem die Anschlußteile 5 in den Trägerteilen 4 der Adaptervorrichtung 1 noch keine Ausrichtung und Fixierung erfahren haben. Danach werden auf die Richtsstifte 26 je ein Richtglied 27 der Richtvorrichtung 25 aufgesetzt und die Richtglieder 27 an einer Richtschablone 28 der Richtvorrichtung 25 ausgerichtet und festgelegt, wodurch sämtliche Richtstifte 26 eine zueinander achsparallele Ausrichtung erhalten. Dabei werden die Richtstifte 26 in der Spannhülse fixiert, die im Bereich ihres unteren Endes durch den Spannvorgang zusammengedrückt wird. Danach werden mit einem Bohrer die Anschlußteile 5 in den Adaptervorrichtungen 1 angebohrt und die Fixierschrauben 15 eingesetzt, wonach der Richtvorgang für die Anschlußteile 5 abgeschlossen ist. Alsdann wird die Richtvorrichtung 25 abgenommen, und nach Entfernen der Richtstifte 26 werden Ankerkopfteile in die Anschlußteile 5 eingeschraubt, wodurch nun Anker gebildet sind, deren Kopfteile exakt untereinander parallelachsig ausgerichtet sind.

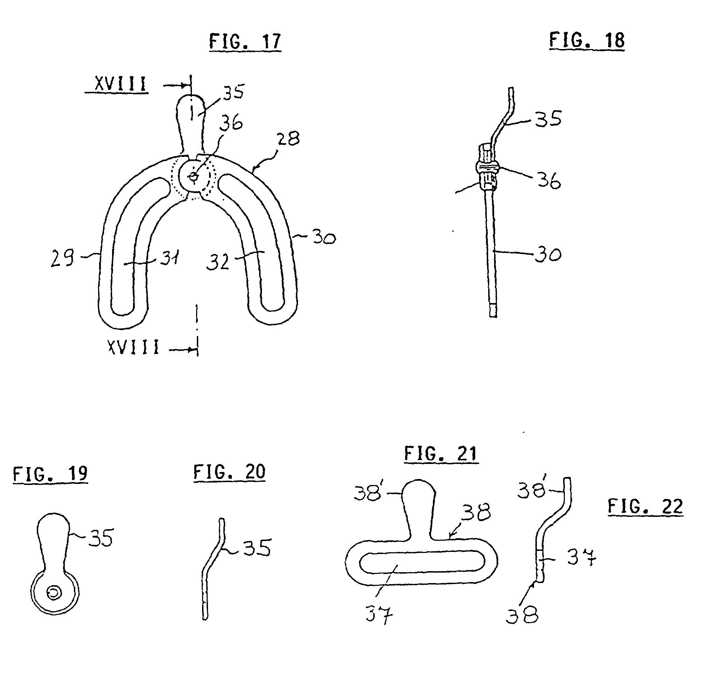

Die in Fig. 17 und 18 veranschaulichte Ausführung einer Richtschablone 28 hat eine bogenförmige, dem Verlauf eines Kiefers annähernd folgende, flache Gestalt, die zumindest in ihren Seitenbereichen 29,30 mit einem vorteilhaft mittigen Längsschlitz 31 bzw. 32 versehen ist. Die Ober- und die Unterseite 33,34 der Richtschablone 28 sind untereinander parallele Richtflächen, an denen in wählbaren, sich durch die Positionen der Adaptervorrichtungen 1 im Kiefer ergebenden Positionen die Richtglieder 27 der Richtvorrichtung 25 ausrichtbar und festklemmbar sind.

Die Richtschablone 28 besteht aus zwei verschwenkbar verbundenen Halbteilen, die durch Verschwenken an den Kieferverlauf anpaßbar sind.

Die Halbteile 29,30 der Richtschablone 28 sind mit einem Griffteil 35 mittels eines Zapfens 36 gelenkig verbunden, der eine gemeinsame Schwenkachse definiert und zudem die Teile 29,30 aneinanderpreßt, um einen Verstellwiderstand zu definieren. Anstelle einer für beide Halbteile 29,30 der Richtschablone 28 gemeinsamen Gelenkverbindung mit dem Griffteil 35 besteht auch die Möglichkeit, die Teile 29,30 jeweils gesondert voneinander an einem mit einem Langloch versehenen Griffteil anzubringen. Zweckmäßig sind in diesem Falle die Halbteile 29,30 im Bereich ihrer Verbindungsstelle mit dem Griffteil entlang dem Langloch verschieblich abgestützt. Anstelle der bogenförmigen Ausführung der Richtschablone 28 kann diese auch die Ausgestaltung nach Fig. 21 und 22 haben, bei der in einem geraden Grundteil 38 mit Griffteil 38' ein gerader Schlitz 37 zur Ausrichtung der Anschlußteile 5 von maximal zwei Ankern vorgesehen ist.

Die Richtglieder 27 der Richtvorrichtung 25 umfassen im einzelnen einen mit seiner Oberseite an der Unterseite 34 der Richtschablone 28 ausrichtbaren unteren Parallelisierungsteil 39 und einen mit seiner Unterseite an der Oberseite 33 der Richtschablone 28 ausrichtbaren oberen Parallelisierungsteil 40. Beide Parallelisierungsteile 39,40 sind von einer im unteren Teil geschlitzten Spannhülse 41 durchgriffen, in die von unten der Richtstift 26 einführbar und exakt festspannbar ist. Die Spannhülse 41 weist ein als Anschlag für den unteren Parallelisierungsteil 39 ausgebildetes unteres Ende 42 auf, das zweckmäßig als konische Erweiterung ausgeführt ist und dementsprechend einen Zentriereffekt ausübt. Insbesondere aber führt die konische Erweiterung 42 beim Anziehen der Spannmutter 45 zu einer Querschnittsverringerung im Bereich des geschlitzten Hülsenteils, durch die der Richtstift festgelegt wird.

Auf der Spannhülse 41 ist im Bereich oberhalb des oberen Parallelisierungskörpers 40 eine Außengewindebuchse 43 verdrehsicher angebracht, die durch einen Sicherungsring 44 gegen Abziehen in axialer Richtung gesichert ist. Auf diese Außengewindebuchse 43 ist eine Spannmutter 45 aufschraubbar, die sich im Zuge ihres Aufschraubens mit ihrer Unterseite 46 auf die Oberseite des oberen Parallelisierungsteils 40 auflegt und so die Teile 39,40 und 43 sowie 26 und 41 zusammenspannt. Die Spannmutter 45 ist zweckmäßig als Rändelmutter ausgeführt und so von Hand betätigbar.

Die Spannhülse 41 ist mit außenseitigen, längsgerichteten Riegelfedern 47 versehen, um die Teile 40 und 43, gegebenenfalls auch 39, verdrehfest auf sich abzustützen , die hierfür mit entsprechenden Riegelnuten 48, 49 bzw. 50 versehen sind. Bei der dargestellten Ausführung der Spannhülse 41 sind allerdings die Riegelfedern 47 in der Länge so bemessen, daß der untere Parallelisierungsteil 39 frei auf der Spannhülse verdrehbar abgestützt ist.

Der obere Parallelisierungsteil 40 der Richtglieder 27 weist einen zentralen, in den Längsschlitz 31 bzw. 32 in der Richtschablone 28 abwärts vorspringenden Ansatz 51 auf, der eine langgestreckte, langlochähnliche Umfangskontur aufweist und in Richtung seiner Längserstreckung eine Länge hat, welche die Breite des Längsschlitzes 31 bzw. 32 in der Richtschablone überschreitet. Dies ermöglicht es, beim Richtvorgang den Ansatz 51 an den Begrenzungsflächen des zugehörigen Längsschlitzes 31 bzw. 32 anzulegen und gegen Weiterverdrehen zu sichern.

Mit Hilfe der vorstehend beschriebenen Richtvorrichtung ist eine überaus schnelle und präzise parallele Ausrichtung der Anschlußteile 5 herbeiführbar, die nach ihrer Fixierung mittels der Fixierschrauben 15 und nach Einschrauben der Ankerkopfteile diesen die gewünschte parallele Ausrichtung vorgeben.

Auf die parallel ausgerichteten Anschlußteile kann eine industriell vorgefertigte Suprakonstruktion festgelegt werden. Da aufwendige zahntechnische Vermessungen entfallen, reduzieren sich die Patientensitzungen.

## Patentansprüche

1. Richtvorrichtung zur Ausrichtung der Anschlußteile von mehreren, zur gemeinsamen Abstützung einer Zahnprothese Implantatkörpern (2) in einem Kiefer zugeordneten Ankern mit einer Adaptervorrichtung (1), die jeweils einen in einen Implantatkörper (2) einschraubbaren Trägerteil (4) und einen im Trägerteil (4) ausrichtbar abgestützten und in ausgerichteter Stellung fixierbaren Anschlußteil (5) für eine Verbindung mit einem Ankerkopfteil (6,7) für Zahnprothesen umfassen, **gekennzeichnet durch** eine flache Richtschablone (28), die zumindest mit einem Längsschlitz (31,32) versehen ist und parallelflächige Ober- und Unterseiten (33,34) als Richtflächen darbietet, und **durch** an der Richtschablone (28) in wählbaren Positionen ausrichtbare Richtglieder (27) für die Aufnahme je eines Richtstiftes (26), der in die Anschlußteile (5) der Adaptervorrichtungen (1) einsetzbar ist.

2. Richtvorrichtung nach Anspruch 1, **dadurch gekennzeichnet, daß** die Richtschablone (28) aus zwei bogenförmigen, dem Verlauf eines Kiefers annähernd folgenden, verschwenk- und feststellbaren verbundenen Halbteilen (29,30) besteht.

3. Richtvorrichtung nach Anspruch 1 oder 2, **dadurch gekennzeichnet, daß** die Längsschlitze (31,32) in den Halbteilen (29,30) der Richtschablone (28) mittig verlaufen.

4. Richtvorrichtung nach einem der Ansprüche 1 bis 3, **dadurch gekennzeichnet, daß** die Halbteile der Richtschablone (28) an einem Griffteil (35) abgestützt und relativ zu diesem verschwenk- und/oder verschieb- und feststellbar abgestützt sind.

5. Richtvorrichtung nach einem der Ansprüche 1 bis 4, **dadurch gekennzeichnet, daß** die Richtglieder (27) einen mit seiner Oberseite an der Unterseite (34) der Richtschablone (28) ausrichtbaren unteren Parallelisierungsteil (39), einen mit seiner Unterseite an der Oberseite (33) der Richtschablone (28) ausrichtbaren oberen Parallelisierungsteil (40), eine beide Parallelisierungsteile (39,40) durchgreifende Spannhülse (41), in die von unten ein Richtstift (26) einführbar ist, und Spannmittel (43,45) umfassen, mittels der die Parallelisierungsteile (39,40) unter Ausrichtung an der Richtschablone (28) auf dieser festlegbar sind.

6. Richtvorrichtung nach Anspruch 5, **dadurch gekennzeichnet, daß** der obere Parallelisierungsteil (40) einen zentralen, in den Längsschlitz (31,32) in der Richtschablone (28) abwärts vorspringenden Ansatz (51) aufweist, der eine langgestreckte Umfangskontur aufweist und in Richtung seiner Längserstreckung eine Länge aufweist, welche die Breite des Längsschlitzes (31,32) in der Richtschablone (28) überschreitet.

7. Richtvorrichtung nach einem der Ansprüche 1 bis 6, **dadurch gekennzeichnet, daß** die Spannhülse (41) ein als Anschlag für den unteren Parallelisierungsteil (39) ausgebildetes unteres Ende (42) aufweist.

8. Richtvorrichtung nach einem der Ansprüche 1 bis 7, **dadurch gekennzeichnet, daß** die Spannhülse (41) außenseitige längsgerichtete Riegelfedern (47) aufweist, und die Parallelisierungsteile (39,40) mit Riegelnuten (49,50) versehen und auf der Spannhülse (41) gegen Verdrehen gesichert sind.

9. Richtvorrichtung nach einem der Ansprüche 1 bis 8, **dadurch gekennzeichnet, daß** als Spannmittel eine verdrehsicher auf der Spannhülse (41) abstützbare Außengewindebuchse (43) und eine Spannmutter (45) vorgesehen sind, die auf die Außengewindebuchse (43) aufschraub- und auf die Oberseite des oberen Parallelisierungsteils (40) aufsetzbar ist.

## Claims

1. Alignment device for aligning the connection parts of several implant bodies (2) for common support of a dental prosthesis in an anchor assigned to the jaw with an adapter device (1), each of them comprising a support part (4), which can be screwed into an implant body (2), and a connection part (5) which can be supported in alignment in the support part (4) and can be fixed in the aligned position for connection to an anchor head part (6, 7) for dental prostheses, **characterized by** a flat aligning template (28) which is provided at least with one longitudinal slit (31, 32) and has parallel upper and lower faces (33, 34) as alignment surfaces, and by alignment members (27) which can be aligned on the aligning template (28) in selectable positions for receiving in each case an alignment pin (26) which can be fitted into the connection parts (5) of the adapter devices (1).

2. Alignment device according to Claim 1, **characterized in that** the aligning template (28) is made up of two arc-shaped half-parts (29, 30) which are connected pivotably and fixedly to one another and follow approximately the course of a jaw.

3. Alignment device according to Claim 1 or 2, **characterized in that** the longitudinal slits (31, 32) extend centrally in the half-parts (29, 30) of the aligning template (28).

4. Alignment device according to one of Claims 1 to 3, **characterized in that** the half-parts of the aligning template (28) are supported on a grip part (35) and, relative to the latter, are supported in such a way as to be pivotable and/or displaceable and fixable.

5. Alignment device according to one of Claims 1 to 4, **characterized in that** the alignment members (27) comprise a lower parallelization part (39) which can be aligned with its upper face on the lower face (34) of the aligning template (28), an upper parallelization part (40) which can be aligned with its lower face on the upper face (33) of the aligning template (28), a clamping sleeve (41) which engages through both parallelization parts (39, 40) and into which an alignment pin (26) can be inserted from underneath, and clamping means (43, 45) with which the parallelization parts (39, 40) can be fixed with alignment on the aligning template (28).

6. Alignment device according to Claim 5, **characterized in that** the upper parallelization part (40) has a central shoulder (51) which projects downwards into the longitudinal slit (31, 32) in the aligning template (28) and which has an elongate peripheral contour and, in the direction of its longitudinal extent, a length exceeding the width of the longitudinal slit (31, 32) in the aligning template (28).

7. Alignment device according to one of Claims 1 to 6, **characterized in that** the clamping sleeve (41) has a lower end (42) designed as a limit stop for the lower parallelization part (39).

8. Alignment device according to one of Claims 1 to 7, **characterized in that** the clamping sleeve (41) has external, longitudinally directed locking springs (47), and the parallelization parts (39, 40) are provided with locking grooves (49, 50) and are secured against turning on the clamping sleeve (41).

9. Alignment device according to one of Claims 1 to 8, **characterized in that** the clamping means provided comprise an externally threaded bushing (43), which can be supported securely against turning on the clamping sleeve (41), and a clamping nut (45) which can be screwed onto the externally threaded bushing (43) and can be fitted on the upper face of the upper parallelization part (40).

## Revendications

1. Dispositif d'alignement pour l'alignement des parties de raccordement de plusieurs ancres attribuées à des implants (2) dans une mâchoire pour le soutien commun d'une prothèse dentaire avec un dispositif adaptateur (1), qui comprennent chacune une partie support (4) pouvant être vissée dans un implant (2) et une partie de raccordement (5) supportée de façon orientable dans la partie support (4) et pouvant être fixée dans la position d'alignement pour une liaison avec une partie supérieure d'ancre (6, 7) pour prothèses dentaires, **caractérisé par** un gabarit d'alignement (28) plat, qui est pourvu d'au moins une fente longitudinale (31, 32) et présente des côtés supérieurs et inférieurs (33, 34) à faces parallèles comme surfaces d'alignement, et par des organes d'alignement (27) pouvant être orientés sur le gabarit d'alignement (28) dans des positions sélectionnables de manière à recevoir chacun une goupille de redressement (26), qui peut être insérée dans les parties de raccordement (5) des dispositifs adaptateurs (1).

2. Dispositif d'alignement selon la revendication 1, **caractérisé en ce que** le gabarit d'alignement (28) comprend deux demi-parties (29, 30) en forme d'arc, suivant approximativement le tracé d'une mâchoire et reliées l'une à l'autre de façon à pouvoir pivoter et être bloquées.

3. Dispositif d'alignement selon la revendication 1 ou 2, **caractérisé en ce que** les fentes longitudinales (31, 32) sont situées au centre dans les demi-parties (29, 30) du gabarit d'alignement (28).

4. Dispositif d'alignement selon l'une quelconque des revendications 1 à 3, **caractérisé en ce que** les demi-parties du gabarit d'alignement (28) sont appuyées sur une partie de poignée (35) et sont soutenues de façon à pouvoir pivoter et/ou coulisser et être bloquées par rapport à cette partie.

5. Dispositif d'alignement selon l'une quelconque des revendications 1 à 4, **caractérisé en ce que** les organes d'alignement (27) comprennent une partie de parallélisation (39) inférieure, orientable avec son côté supérieur sur le côté inférieur (34) du gabarit d'alignement (28), une partie de parallélisation (40) supérieure, orientable avec son côté inférieur sur le côté supérieur (33) du gabarit d'alignement (28), une douille de serrage (41) traversant les deux parties de parallélisation (39, 40), dans laquelle une broche d'alignement (26) peut être introduite par le bas, et des moyens de serrage (43, 45), au moyen desquels les parties de parallélisation (39, 40) peuvent être fixées avec alignement sur le gabarit d'alignement (28) sur celui-ci.

6. Dispositif d'alignement selon la revendication 5, **caractérisé en ce que** la partie de parallélisation (40) supérieure présente une embase (51) centrale, et dépassant vers le bas dans la fente longitudinale (31, 32) dans le gabarit d'alignement (28), laquelle embase présente un contour périphérique de forme allongée et présente en direction de son extension longitudinale une longueur supérieure à la largeur de la fente longitudinale (31, 32) dans le gabarit d'alignement (28).

7. Dispositif d'alignement selon l'une quelconque des revendications 1 à 6, **caractérisé en ce que** la douille de serrage (41) présente une extrémité (42) inférieure conçue comme butée pour la partie de parallélisation (39) inférieure.

8. Dispositif d'alignement selon l'une quelconque des revendications 1 à 7, **caractérisé en ce que** la douille de serrage (41) présente des ressorts de verrou (47) côté extérieur et disposés longitudinalement, et les parties de parallélisation (39, 40) sont pourvues d'encoches de verrou (49, 50) et sont bloquées sur la douille de serrage (41) contre la rotation.

9. Dispositif d'alignement selon l'une quelconque des revendications 1 à 8, **caractérisé en ce qu'**il est prévu comme moyen de serrage une douille à filet extérieur (43) pouvant être appuyée sur la douille de serrage (41) de façon à ne pas tourner et un écrou de serrage (45), qui peut être vissé sur la douille à filet extérieur (43) et être posé sur le côté supérieur de la partie de parallélisation (40) supérieure.
